(19) Europäisches Patentamt
European Patent Office
Office européen des brevets

(11) **EP 3 916 047 B1**

(12) **EUROPEAN PATENT SPECIFICATION**

(45) Date of publication and mention
of the grant of the patent:
**14.09.2022   Bulletin 2022/37**

(21) Application number: **20177306.6**

(22) Date of filing: **29.05.2020**

(51) International Patent Classification (IPC):
***C08L 23/12*** *(2006.01)*

(52) Cooperative Patent Classification (CPC):
(C-Sets available)
**C08L 23/12;** C08L 2207/062; C08L 2207/20 (Cont.)

(54) **UPGRADED HIGH GLOSS RECYCLING COMPOSITION**

VERBESSERTE HOCHGLANZ-RECYCLINGZUSAMMENSETZUNG

COMPOSITION DE RECYCLAGE À BRILLANT ÉLEVÉ AMÉLIORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.12.2021   Bulletin 2021/48**

(73) Proprietor: **Borealis AG**
**1020 Vienna (AT)**

(72) Inventors:
• **Kahlen, Susanne**
**4021 Linz (AT)**
• **Abbasi, Mahdi**
**4021 Linz (AT)**
• **Bachtrod, Manfred**
**4021 Linz (AT)**
• **Braun, Hermann**
**4021 Linz (AT)**

(74) Representative: **Maiwald Patent- und
Rechtsanwaltsgesellschaft mbH
Elisenhof
Elisenstraße 3
80335 München (DE)**

(56) References cited:
**EP-A1- 3 165 473        WO-A1-2015/169690
WO-A1-2019/086359**

EP 3 916 047 B1

(52) Cooperative Patent Classification (CPC): (Cont.)

C-Sets
**C08L 23/12, C08L 23/12, C08L 23/06;**
**C08L 23/12, C08L 23/12, C08L 23/06, C08K 3/04;**
**C08L 23/12, C08L 23/12, C08L 23/06, C08L 23/06**

## Description

### Field of the Invention

The present invention relates to upgraded recycling compositions having high gloss and to the use of virgin polypropylene and virgin polyethylene for improving gloss.

### Background

Gloss has been mainly evaluated in the field of heterophasic polypropylene compositions. However, gloss is also a problem when it comes to recycling polyolefin materials. Generally speaking, the gloss observed for various recycling streams rules out industrial relevant application. Surprisingly this observation is even more true for higher quality recycling materials as available on the market. Thus, there is a high demand for compositions having a considerable amount of recycling material and at the same time acceptable mechanical properties as well as good gloss. WO2019086359 for instance relates to compositions comprising recycled polypropylene, however it does not mention the problem of improving gloss.

Very little work is known so far. For example, KIM, Soon-Deok, et al. "Effect of Ethylene-Propylene Copolymer Composition on Morphology and Surface Properties of Impact Poly (propylene) Copolymer" In: Macromolecular Symposia. Weinheim: WILEY-VCH Verlag, 2012. S. 27-33 have evalueted the influence of EPR composition in heterophasic PP (Samsung Total Petrochemicals) on the gloss. In the field of recycling materials, there is practically nothing known as far as gloss is concerned.

Thus, there remains the need for upgrading such recycling streams addressing the above mentioned needs.

### Summary of the Invention

In its broadest aspect, the present invention insofar provides

HLZ:SC
a polypropylene composition (C) obtainable by blending:

a) 20.0 to 80.0 wt.-%, based on the total weight of the composition, of a blend (A) comprising

A-1) isotactic polypropylene
A-2) polyethylene as well as ethylene containing copolymers

wherein the weight ratio of isotactic polypropylene (A-1) and polyethylene and ethylene containing copolymers (A-2) is from 19:1 to 3:7,
and
wherein blend (A) is a recycled material, which is recovered from a waste plastic material derived from post-consumer and/or post-industrial waste;
b) 20.0 to 80.0 wt.-%, based on the total weight of the composition, of a virgin polypropylene homopolymer having

(i) MFR (230 °C, 2.16 kg; ISO 1133) in the range of 12 to 27 g/10 min
(ii) a flexural modulus (ISO 178) of at least 1200 MPa

c) 0.0 to 15.0 wt.-% of a virgin high density polyethylene having

(i) MFR (230 °C, 2.16 kg; ISO 1133) in the range of 2 to 8 g/10 min
(ii) a density of 950 to 960 kg/m$^3$ (ISO 1183),

d) 0.0 to 5.0 wt.-% of a carbon black polypropylene masterbatch
e) 0.0 to 3.0 wt.-% of additives selected from antioxidants and/or UV stabilizers whereby components a) to e) add up to 100 wt.-%.

In a first aspect the present invention provides
a polypropylene composition (C) obtainable by blending:

a) 20.0 to 50.0 wt.-%, based on the total weight of the composition, of a blend (A) comprising

A-1) isotactic polypropylene
A-2) polyethylene as well as ethylene containing copolymers

wherein the weight ratio of isotactic polypropylene (A-1) and polyethylene and ethylene containing copolymers (A-2) is from 19:1 to 3:7, preferably 19:1 to 3:2, and wherein blend (A) is a recycled material, which is recovered from a waste plastic material derived from post-consumer and/or post-industrial waste;
b) 50.0 to 80.0 wt.-%, based on the total weight of the composition, of a virgin polypropylene homopolymer having

(i) MFR (230 °C, 2.16 kg; ISO 1133) in the range of 12 to 27 g/10 min
(ii) a flexural modulus (ISO 178) of at least 1200 MPa

c) 0.0 to 15.0 wt.-% of a virgin high density polyethylene having

(i) MFR (230 °C, 2.16 kg; ISO 1133) in the range of 2 to 8 g/10 min
(ii) a density of 950 to 960 kg/m$^3$ (ISO 1183),

d) 0.0 to 5.0 wt.-% of a carbon black polypropylene masterbatch
e) 0.0 to 3.0 wt.-% of additives selected from the group of antioxidants and/or UV stabilizers

whereby components a) to e) add up to 100 wt.-%.
In a second aspect, the present invention provides
a polypropylene composition (C) obtainable by blending:

a) 50.0 to 80.0 wt.-%, based on the total weight of the composition, of a blend (A) comprising

A-1) isotactic polypropylene
A-2) polyethylene as well as ethylene containing copolymers

wherein the weight ratio of isotactic polypropylene (A-1) and polyethylene and ethylene containing copolymers (A-2) is from 3:2 to 2:3,
and
wherein blend (A) is a recycled material, which is recovered from a waste plastic material derived from post-consumer and/or post-industrial waste;
b) 20.0 to 50.0 wt.-%, based on the total weight of the composition, of a virgin polypropylene homopolymer having

(iii) MFR (230 °C, 2.16 kg; ISO 1133) in the range of 12 to 27 g/10 min
(iv) a flexural modulus (ISO 178) of at least 1200 MPa

c) 0.0 to 5.0 wt.-% of a carbon black polypropylene masterbatch
d) 0.0 to 3.0 wt.-% of additives selected from antioxidants and/or UV stabilizers whereby components a) to d) add up to 100 wt.-%.

The present invention is further concerned with the
use of a virgin polypropylene homopolymer together with a virgin high density polyethylene in a composition comprising a blend (A), whereby blend (A) comprises

A-1) isotactic polypropylene
A-2) polyethylene as well as ethylene containing copolymers

wherein the weight ratio of isotactic polypropylene (A-1) and polyethylene and ethylene containing copolymers (A-2) is from 19:1 to 3:2, and

wherein blend (A) is a recycled material, which is recovered from a waste plastic material derived from post-consumer and/or post-industrial waste;
whereby blend (A) is present in an amount of 20.0 to 35.0 wt.-%, based on the total weight of the composition;
whereby said virgin polypropylene homopolymer has

(i) MFR (230 °C, 2.16 kg; ISO 1133) in the range of 12 to 27 g/10 min

(ii) a flexural modulus (ISO 178) of at least 1200 MPa

and is present in an amount of 50.0 to 75.0 wt.-%, based on the total weight of the composition, and whereby said virgin high density polyethylene has

(i) MFR (230 °C, 2.16 kg; ISO 1133) in the range of 2 to 8 g/10 min
(ii) a density of 950 to 960 kg/m$^3$ (ISO 1183)

and is present in an amount of 5 to 15 wt.-% based on the total weight of the composition, for increasing gloss (GU; 60 °, measured as described in the experimental part) by at least 2 % of the measurement value versus the gloss of the composition not containing the virgin polypropylene homopolymer and not containing the virgin high density polyethylene.

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Gloss shall mean the gloss measured at an angle of 60 ° if not mentioned otherwise.

Unless clearly indicated otherwise, use of the terms "a," "an," and the like refers to one or more.

For the purposes of the present description and of the subsequent claims, the term "recycled waste" is used to indicate a material recovered from both post-consumer waste and post-industrial waste, as opposed to virgin polymers. Post-consumer waste refers to objects having completed at least a first use cycle (or life cycle), i.e. having already served their first purpose; while post-industrial waste refers to manufacturing scrap, which does not normally reach a consumer. The limonene content allows figuring out whether or not a material qualifies as a "recycled waste". In addition to that other contaminants such as presence of fatty acids, polystyrene, polyamide, paper, wood and the like can be used for figuring out whether or not a material is a "recycled waste".

The term "virgin" denotes the newly produced materials and/or objects prior to their first use, which have not already been recycled. Such virgin material do not contain limonene, i.e. the detectable values are significantly below 0.10 ppm when measured as described in the experimental part.

Many different kinds of polyethylene or polypropylene can be present in "recycled waste". Blend (A) according to the present invention includes at least a polypropylene, polyethylene, limonene.

Blend (A) is further characterized by a content of istotactic polypropylene. The content of isotactic polypropylene may easily be determined as described in the experimental part.

Blend (A) is further characterized by a content of polyethylene and ethylene containing copolymers, whereby again determination is easily possible by way of a calibration method as described in the experimental part. Polyethylene denotes any of the conventional polyethylenes such as LDPE, LLDPE, MDPE, and HDPE.

Ethylene containing copolymers are extremely widespread and may include for example ethylene propylene copolymers such as ethylene propylene rubber, plastomers such as $C_2C_8$ resins, and countless other polymers including ethylene-derived units.

The term "recycled material" such as used herein denotes materials reprocessed from "recycled waste".

A polymer blend denotes a mixture of two or more polymeric components. In general, the blend can be prepared by mixing the two or more polymeric components. Suitable mixing procedures known in the art are post-polymerization blending procedures. Post-polymerization blending can be dry blending of polymeric components such as polymer powders and/or compounded polymer pellets or melt blending by melt mixing the polymeric components.

If not indicated otherwise "%" refers to weight-%.

As a matter of definition, a virgin polypropylene homopolymer as well as a virgin polyethylene can also contain a polymeric nucleating agent.

Preferably the polypropylene composition (C) according to the present invention includes a virgin polypropylene homopolymer having tensile strength of 30 to 45 MPa (ISO 527-2), preferably a tensile strength of 31 to 37 MPa.

Simultaneously but independent therefrom, the heat deflection temperature B (0.45 MPa; ISO 75-2) of the virgin polypropylene homopolymer is at least 76°C, preferably up to 120°C. In a further aspect, the virgin high density polyethylene preferably has a tensile modulus (1 mm/min; ISO 527-2) of at least 800 MPa, more preferably at least 850 MPa. Usually the tensile modulus will not be higher than 1350 MPa.

In yet a further aspect, the virgin high density polyethylene preferably has a heat deflection temperature (0.45 MPa; ISO 75-2) of at least 62°C, more preferably at least 63°C. Usually the heat deflection temperature will not be higher than 100°C.

In yet a further aspect, the virgin high density polyethylene preferably has a shore D hardness of 56 to 64 (ISO 868), preferably 58 to 64.

The preferred tensile strength, preferred heat deflection temperature, preferred tensile modulus , and preferred heat deflection temperature can be present individually or in combination.

The composition (C) according to the present invention usually will be in black color. This is affected by incorporation of carbon black polypropylene masterbatch as known in the art. The amount of carbon black polypropylene masterbatch usually will not be higher than 5 wt.-%, preferably not higher than 4 wt.-% and most preferably not higher than 2.5 wt.-%. The carbon black polypropylene masterbatch is a dispersion of carbon black in an amount of 35 to 45 wt.-% in polypropylene, preferably about 40 wt.-% in polyproplene. Usuallly the polypropylene as used for carbon black dispersion will be a virgin polypropylene.

The preparation of composition (C) according to the present invention is straightforward. Virgin polypropylene homopolymers and the virgin high density polyethylenes suitable for the purpose are commercially available.

## Detailed description

According to a first embodiment of the present invention, blend (A) has a content of limonene as determined by using solid phase microextraction (HS-SPME-GC-MS) of from 0.1 ppm to 100 ppm, preferably from 1 ppm to 50 ppm, more preferably from 2 ppm to 50 ppm, most preferably from 3 ppm to 35 ppm. In a second embodiment, blend (A) has a content of limonene as determined by using solid phase microextraction (HS-SPME-GC-MS) of from 0.10 ppm to less than 1 ppm, preferably 0.10 to less than 0.85 ppm, most preferably 0.10 to less than 0.60 ppm.

Blend (A) according to the second embodiment can be prepared by subjecting blend (A) according to the first embodiment to washing and/or aeration. Washing can be effected by industrial washers such as provided by Herbold Meckesheim GmbH. Depending on the origin of the waste stream, several washing cycles may be necessary. Various aeration processes such as described in US 5,767,230 are also known in the art. US 5,767,230 is incorporated by reference herewith. The process as described in US 5,767,230 is preferably combined with a washing stage as described above.

A particularly preferred embodiment is

a polypropylene composition (C) obtainable by blending:

a) 20.0 to 40.0 wt.-%, based on the total weight of the composition, of a blend (A) comprising

A-1) isotactic polypropylene
A-2) polyethylene as well as ethylene containing copolymers

wherein the weight ratio of isotactic polypropylene (A-1) and polyethylene and ethylene containing copolymers (A-2) is from 19:1 to 3:2,
and
wherein blend (A) is a recycled material, which is recovered from a waste plastic material derived from post-consumer and/or post-industrial waste;
b) 60.0 to 80.0 wt.-%, based on the total weight of the composition, of a virgin polypropylene homopolymer having

(v) MFR (230 °C, 2.16 kg; ISO 1133) in the range of 12 to 27 g/10 min
(vi) a flexural modulus (ISO 178) of at least 1200 MPa

c) 0.0 to 5.0 wt.-% of a carbon black polypropylene masterbatch
d) 0.0 to 3.0 wt.-% of additives selected from antioxidants and/or UV stabilizers whereby components a) to d) add up to 100 wt.-%.

In this embodiment no virigin polyethylene is added. In other words, the composition does not include virgin polyethylene.

In this embodiment the carbon black polypropylene masterbatch is preferably present in an amount of 1.0 to 3.0 wt.-%. The invention insofar provides as a particularly preferred embodiment
a polypropylene composition (C) obtainable by blending:

a) 20.0 to 32.0 wt.-%, based on the total weight of the composition, of a blend (A) comprising

A-1) isotactic polypropylene
A-2) polyethylene as well as ethylene containing copolymers

wherein the weight ratio of isotactic polypropylene (A-1) and polyethylene and ethylene containing copolymers (A-2) is from 19:1 to 3:2,
and
wherein blend (A) is a recycled material, which is recovered from a waste plastic material derived from post-consumer and/or post-industrial waste;
b) 65.0 to 79.0 wt.-%, based on the total weight of the composition, of a virgin polypropylene homopolymer having

    (vii) MFR (230 °C, 2.16 kg; ISO 1133) in the range of 12 to 27 g/10 min
    (viii) a flexural modulus (ISO 178) of at least 1200 MPa

c) 1.0 to 3.0 wt.-% of a carbon black polypropylene masterbatch
d) 0.0 to 3.0 wt.-% of antioxidants and/or UV stabilizers

whereby components a) to d) add up to 100 wt.-%.

An alternative also preferred embodiment is
a polypropylene composition (C) obtainable by blending:

    a) 20.0 to 35.0 wt.-%, based on the total weight of the composition, of a blend (A) comprising

        A-1) isotactic polypropylene
        A-2) polyethylene as well as ethylene containing copolymers

    wherein the weight ratio of isotactic polypropylene (A-1) and polyethylene and ethylene containing copolymers (A-2) is from 19:1 to 3:2, and
    wherein blend (A) is a recycled material, which is recovered from a waste plastic material derived from post-consumer and/or post-industrial waste;
    b) 50.0 to 74.0 wt.-%, based on the total weight of the composition, of a virgin polypropylene homopolymer having

        (i) MFR (230 °C, 2.16 kg; ISO 1133) in the range of 12 to 27 g/10 min
        (ii) a flexural modulus (ISO 178) of at least 1200 MPa

    c) 5.0 to 15.0 wt.-% of a virgin high density polyethylene having

        (iii) MFR (230 °C, 2.16 kg; ISO 1133) in the range of 2 to 8 g/10 min
        (iv) a density of 950 to 960 kg/m$^3$ (ISO 1183),

    d) 1.0 to 3.0 wt.-% of a carbon black polypropylene masterbatch
    e) 0.0 to 3.0 wt.-% of additives selected from the group of antioxidants and/or UV stabilizers

whereby components a) to e) add up to 100 wt.-%.

These specifically preferred embodiments may be combined with all aspects as disclosed herein in the specification and the claims with respect to the virgin polypropylene, the virgin polyethylene and/or the carbon black polypropylene masterbatch.

**Experimental Part**

Measurement Methods

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR2 of polypropylene is determined at a temperature of 230 °C and a load of 2.16 kg. The MFR2 of polyethylene is determined at a temperature of 190°C and a load of 2.16 kg.

**Amount of iPP, Polystyrene, Polyethylene (and ethylene containing copolymers), poly(ethylene terephthalate), and amount of Polyamide-6**

To establish different calibration curves different standards, iPP and HDPE and iPP, PS and PA6 were blended. For the quantification of the content of the foreign polymers, IR spectra were recorded in the solid-state using a Bruker Vertex 70 FTIR spectrometer. Films were prepared with a compression-moulding device at 190 °C with 4 - 6 MPa clamping force. The thickness of the films for the calibration standards for iPP and HDPE was 300 $\mu$m and for the quantification of the iPP, PS and PA 6 50-100 $\mu$m film thickness was used. Standard transmission FTIR spectroscopy is employed using a spectral range of 4000-400 cm-1, an aperture of 6 mm, a spectral resolution of 2 cm-1, 16 background scans, 16 spectrum scans, an interferogram zero filling factor of 32 and Norton Beer strong apodisation.

The absorption of the band at 1167 cm-1 in iPP is measured and the iPP content is quantified according to a calibration curve (absorption/thickness in cm versus iPP content in weight %).

The absorption of the band at 1601 cm-1 (PS) and 3300 cm-1 (PA6) are measured and the PS and PA6 content quantified according to the calibration curve (absorption/thickness in cm versus PS and PA content in wt %). The content of polyethylene and ethylene containing copolymers is obtained by subtracting (iPP+PS+PA6) from 100, taking into account the content of non-polymeric impurities as determined in the methods below. The analysis is performed as a double determination.

**Amount of Talc and Chalk**

The talc and chalk contents were measured by Thermogravimetric Analysis (TGA); experiments were performed with a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The weight loss between ca. 550°C and 700°C (WCO2) was assigned to CO2 evolving from CaCO3, and therefore the chalk content was evaluated as:

$$\text{Chalk content} = 100/44 \times WCO2$$

Afterwards the temperature was lowered to 300°C at a cooling rate of 20 °C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as:

$$\text{Ash content} = (\text{Ash residue}) - 56/44 \times WCO2 - Wcb$$

Where Ash residue is the weight% measured at 900°C in the first step conducted under nitrogen. The ash content is estimated to be the same as the talc content for the investigated recyclates.

**Amount of Paper and Wood**

The contents of paper and wood were determined by conventional laboratory methods including milling, floatation, microscopy and Thermogravimetric Analysis (TGA).

**Amount of Metals**

The metal content was determined by X-ray fluorescence (XRF).

**Amount of Limonene**

The limonene content was determined by solid phase microextraction (HS-SPME-GC-MS).

Additional details are given below with respect to the specific sample.

**Amount of total fatty acids**

The fatty acid content was determined by solid phase microextraction (HS-SPME-GC-MS). Additional details are given below with respect to the specific sample.

The **tensile modulus** (TM) (and **tensile strength**) were measured according to ISO 527-2 (cross head speed = 1 mm/min for determination of the modulus, thereafter switching to 50 mm/min until break at 23 °C) using injection molded specimens as described in EN ISO 5247-2 (dog bone shape, 4 mm thickness). The measurement was done after 96 h conditioning time of the specimen under standard climate conditions (23 °C and 50 % relative humidity).

The **impact strength** was determined as Charpy Notched Impact Strength (NIS) according to ISO 179-1 eA at +23 °C on injection molded specimens of 80 x 10 x 4 mm prepared according to EN ISO 1873-2. According to this standard samples are tested after 96 hours conditioning at 23 °C and 50 % relative humidity.

The **gloss** was measured according to DIN 67530 at an angle of 60° on injection molded grained specimens. Additional measurements were carried out at 85°. If not mentioned otherwise, "gloss" denotes the gloss measured according to DIN 67530 at an angle of 60 °.

**Flexural modulus** was determined in 3-point-bending according to ISO 178 on injection molded specimens of 80 x 10 x 4 mm prepared in accordance with ISO 294-1:1996.

**Density** was determined according to ISO 1183-187. Sample preparation was done by compression moulding in accordance with ISO 1872-2:2007.

**Heat deflection temperature** was determined according to ISO 75-2.

The HDT was determined on injection molded test specimens of $80 \times 10 \times 4$ mm$^3$ prepared according to ISO 1873-2 and stored at +23°C for at least 96 hours prior to measurement. The test was performed on flatwise supported specimens according to ISO 75, condition A, with a nominal surface stress of 1.80 MPa.

**Shore** D was determined according to ISO 868.

## Examples

A polypropylene-rich recyclate and a lower quality polypolypropylene/polyethlyene;ethylene copolymers containing recyclate have been used as blend (A) both recyclates originating from household trash.

## Polypropylene-rich recyclate

| | |
|---|---|
| Isotactic Polypropylene | 92 wt.-% |
| Polyethylene and Polyethylene Copolymers | 7 wt.-% |
| Ratio iPP//PE+PE-CoPo) | 13:1 |
| Polystyrene | << 1.0 wt.-% |
| Polyamide-6 | < 0.3 wt.-% |
| Poly(ethylene terephthalate) | trace |
| Talc content | < 0.5 wt.-% |
| Chalk content | < 0.5 wt.-% |
| Limonene content | 2.1 ppm |
| Total fatty acid content | nd |

## Limonene content

## Measurement

Limonene quantification was carried out using solid phase micro-extraction (HS-SPME-GC-MS) by standard addition.

50 mg ground samples were weighed into 20 mL headspace vials and after the addition of limonene in different concentrations and a glass-coated magnetic stir bar, the vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6, 11 and 16.5 mg/kg limonene were used in combination with some of the samples tested in this application. For quantification, ion-93 acquired in SIM mode was used. Enrichment of the volatile fraction was carried out by headspace solid phase micro-extraction with a 2 cm stable flex 50/30 pm DVB/Carboxen/PDMS fibre at 60°C for 20 minutes. Desorption was carried out directly in the heated injection port of a GCMS system at 270°C. GCMS Parameters:

Column: 30 m HP 5 MS 0.25*0.25

Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C inter face temperature
Acquisition: SIM scan mode
Scan parameter: 20-300 amu
SIM Parameter: m/Z 93, 100 ms dwell time

**Table 2:** Limonene content

| Sample | Limonene HS-SPME-GC-MS[1] |
|---|---|
| polypropylene-rich recyclate | 2.1 ppm |
| lower quality polypolypropylene/polyethlyene;ethylene copolymers recyclate | 2.6 ppm |
| [1]Headspace Solidphase Microextraction. | |

**Total free fatty acid content**

Fatty acid quantification was carried out using headspace solid phase micro-extraction (HS-SPME-GC-MS) by standard addition.
50 mg ground samples were weighed in 20 mL headspace vial and after the addition of limonene in different concentrations and a glass coated magnetic stir bar the vial was closed with a magnetic cap lined with silicone/PTFE. 10 μL Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

GCMS Parameter:

Column: 20 m ZB Wax plus 0.25*0.25
Injector: Split 5:1 with glass lined split liner, 250°C
Temperature program: 40°C ( 1 min) @6°C/min to 120°C, @15°C to 245 °C (5 min)
Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60,74, 6.6 scans/s

**Table 3:** Total fatty acid content in Polypropylene rich recyclate

| Sample | Total fatty acid concentration [mg/ kg][1] |
|---|---|
| Polypropylene rich recyclate | nm |
| Lower quality polypropylene/polyethylene/ethylene copolymers recyclate | nm |
| [1]The concentration of acetic acid, propionic acid, butyric acid, pentanoic acid, hexanoic acid, octanoic acid, nonanoic acid and decanoic acid in each sample was added together to give a totally fatty acid concentration value. | |

The upgrading polypropylene resins were prepared as follows.

| | PP virgin (2) | PP virgin (1) |
|---|---|---|
| | Example 1b of WO | Example 1a of WO |
| Catalyst type | 2015197434 A1 | 2015197434 A1** |
| Donor type | D | D |

(continued)

| | | PP virgin (2)<br>Example 1b of WO<br>2015197434 A1 | PP virgin (1)<br>Example 1a of WO<br>2015197434 A1** |
|---|---|---|---|
| Catalyst type | | | |
| TEAL/Ti | [mol/mol] | 250 | 250 |
| TEAL/Donor | [mol/mol] | 10 | 15 |
| **Prepolymerization** | | | |
| Temperature | [°C] | 30 | 30 |
| Pressure | [kPa] | 5450 | 5450 |
| Residence time | [h] | 0.30 | 0.30 |
| Loop (Reactor 1) | | | |
| Temperature | [°C] | 80 | 80 |
| Pressure | [kPa] | 5330 | 5330 |
| H2/C3 ratio | [mol/kmol] | 1.8 | 3.5 |
| Residence time | [h] | 0.5 | 0.5 |
| Loop reactor split | [wt.-%] | 60 | 60 |
| MFR2 | [g/10 min] | 10 | 20 |
| **GPR (Reactor 2)** | | | |
| Temperature | [°C] | 80 | 80 |
| Pressure | [kPa] | 2500 | 2500 |
| H2/C3 ratio | [mol/kmol] | 55 | 24 |
| Polymer residence time | [h] | 1.5 | 1.5 |
| MFR in GPR | [g/10 min] | 53 | 20 |
| GPR reactor split | [wt.-%] | 40 | 40 |
| **Polymer** | | | |
| Tm | [°C] | 165 | 165 |
| MFR total | [g/10 min] | 20 | 20 |
| XCS | [wt.-%] | 1.9 | 2.5 |
| Nucleation | [type] | 0.43 wt% talc | none |

The virgin polyethylene ("PE virgin") was also produced in a prepoly/loop/gpr reactor combination using a conventional 4th generation ZN catalyst. Loop density was 970 kg/m$^3$ and loop split was 60 wt.-%-. Al/Ti ratio: 8.3; Essentially identical polyethylene resins are commercially available.

Three compositions were compounded according to the recipes given in Table 4. All compositions were stabilized with 0.3 wt.-% Irganox B255FF.

**Table 4**            Recipes of inventive and comparative examples

| | | CE1 | CE2 | RE1 (PP virgin) | RE2 (PE virgin) | IE1 | IE2 | IE3 |
|---|---|---|---|---|---|---|---|---|
| Recyclate Blend (A) polypropylene-rich recyclate | wt.-% | 100 | 98 | | | 25 | 75 | 25 |
| Ratio iPP/PE+PE-CoPo | | 13/1 | about 13/1 | | | | | |
| PP virgin (1) | wt.-% | | | 100 | | 73 | 23 | 63 |
| CMB black | wt.-% | | 2 | | | 2 | 2 | 2 |
| PE virgin | wt.-% | | | | | | | 10 |
| Gloss (60°) | | nm | 62 | 68 | nm | 67 | 64 | 70 |
| Gloss (85°) | | | 94 | 95 | | 95 | 94 | 96 |

PP virgin (1)         virgin propylene homopolymer having an $MFR_2$ of about 20 g/10 min, a flexural modulus (ISO 178) of 1350 MPa, a heat deflection temperature B (0.45 MPa; ISO 75-2) of 80°C and a tensile strength (50 mm/min; ISO 527-2) of 35 MPa

CMB black         carbon black masterbatch using PP virgin

PE virgin         virgin high density polyethylene having a density of 954 kg/m³ (ISO11833), a melt flow rate of 4 g/10min (ISO 1133; 2.16 kg) and a Tensile modulus of 850 MPa (1mm/min; ISO 527-2)

AO         Irganox B255 FF (amount of 0.3 wt.-%) for all examples)

Ratio iPP/PE+PE-CoPo         ratio of iPP versus polyethylene and ethylene containing copolymers as described in the method section

It can be see that gloss of the polypropylene rich recyclate was improved by the addition of the virgin propylene homopolymer in an amount of 73 wt.-% very close to the value of the virgin material. However, at a low amount of 23 wt.-% of the virgin propylene homopolymer the gloss was somewhat lower. Gloss could be further improved by addition of virgin high density polyethylene in an amount of 10 wt.-%:

In the same way more polyethylene based recylates (Lower quality polypropylene/polyethylene/ethylene copolymers recyclate) were subjected to upgrading. All compositions were stabilized with 0.3 wt.-% Irganox B255FF.

Lower quality polypropylene/polyethylene/ethylene copolymers recyclate

Ratio iPP//PE+PE-CoPo)     about 1:1

**Table 5**                    Recipes of inventive and comparative examples

|  |  | CE3 | RE1 (PP virgin + CB) | IE4 |
|---|---|---|---|---|
| Recyclate Blend (A) Lower quality polypropylene/polyethylene/ethylene copolymers recyclate | wt.-% | 100 |  | 75 |
| Ratio iPP/PE+PE-CoPo |  | about 1:1 |  |  |
| PP virgin (2) |  |  | 98 | 23 |
| CMB black | wt.-% |  | 2 | 2 |
| PE virgin |  |  |  |  |
| Gloss (60°) |  | 76 | 82 | 78 |
| Gloss (85°) |  | 96 | 97 | 97 |

PP virgin (2)          virgin propylene homopolymer having an $MFR_2$ of about 20 g/10 min, a flexural modulus (ISO 178) of 2000 MPa, a heat deflection temperature B (0.45 MPa; ISO 75-2) of 115°C and a tensile strength (50 mm/min; ISO 527-2) of 40 MPa, nucleated by 0.43 wt.-% talc (cf. above)

CMB black          carbon black masterbatch using PP virgin (2)

Ratio iPP/PE+PE-CoPo          ratio of iPP versus polyethylene and ethylene containing copolymers as described in the method section

It can be seen that the gloss of the lower quality polypropylene/polyethylene/ethylene copolymers recyclate could be increased at surprisingly high amounts of the recyclate by adding virgin polypropylene homopolymer in quite a moderate amount..

**Claims**

1.   A polypropylene composition (C) obtainable by blending:

a) 20.0 to 80.0 wt.-%, based on the total weight of the composition, of a blend (A) comprising

A-1) isotactic polypropylene
A-2) polyethylene as well as ethylene containing copolymers

wherein the weight ratio of isotactic polypropylene (A-1) and polyethylene and ethylene containing copolymers (A-2) is from 19:1 to 3:7,

and

wherein blend (A) is a recycled material, which is recovered from a waste plastic material derived from post-consumer and/or post-industrial waste;

b) 20.0 to 80.0 wt.-%, based on the total weight of the composition, of a virgin polypropylene homopolymer having

(i) MFR (230 °C, 2.16 kg; ISO 1133) in the range of 12 to 27 g/10 min
(ii) a flexural modulus (ISO 178) of at least 1200 MPa

c) 0.0 to 15.0 wt.-% of a virgin high density polyethylene having

(i) MFR (230 °C, 2.16 kg; ISO 1133) in the range of 2 to 8 g/10 min
(ii) a density of 950 to 960 kg/m$^3$ (ISO 1183),

d) 0.0 to 5.0 wt.-% of a carbon black polypropylene masterbatch
e) 0.0 to 3.0 wt.-% of additives selected from the group of antioxidants and UV stabilizers

whereby components a) to e) add up to 100 wt.-%.

2. The polypropylene composition (C) according to claim 1 obtainable by blending:

a) 20.0 to 50.0 wt.-%, based on the total weight of the composition, of a blend (A) comprising

A-1) isotactic polypropylene
A-2) polyethylene as well as ethylene containing copolymers

wherein the weight ratio of isotactic polypropylene (A-1) and polyethylene and ethylene containing copolymers (A-2) is from 19:1 to 3:2, and

wherein blend (A) is a recycled material, which is recovered from a waste plastic material derived from post-consumer and/or post-industrial waste;

a) 50.0 to 80.0 wt.-%, based on the total weight of the composition, of a virgin polypropylene homopolymer having

(i) MFR (230 °C, 2.16 kg; ISO 1133) in the range of 12 to 27 g/10 min
(ii) a flexural modulus (ISO 178) of at least 1200 MPa

b) 0.0 to 15.0 wt.-% of a virgin high density polyethylene having

(i) MFR (230 °C, 2.16 kg; ISO 1133) in the range of 2 to 8 g/10 min
(ii) a density of 950 to 960 kg/m$^3$ (ISO 1183),

c) 0.0 to 5.0 wt.-% of a carbon black polypropylene masterbatch
d) 0.0 to 3.0 wt.-% of additives selected from the group of antioxidants and UV stabilizers

whereby components a) to d) add up to 100 wt.-%.

3. . The polypropylene composition (C) according to claim 2, wherein
the virgin high density polyethylene has:
(iii) a tensile modulus (1 mm/min; ISO 527-2) of at least 800 MPa, optionally up to 1300 MPa.

4. The polypropylene composition (C) according to claim 2 or 3, wherein
the virgin high density polyethylene has
(iv) a heat deflection temperature (0.45 MPa; ISO 75-2) of at least 62°C and optionally up to 100°C.

5. The polypropylene composition (C) according to any of claims 2 to 4, wherein the virgin high density polyethylene has
(v) a shore D hardness of 56 to 64 (ISO 868), preferably 58 to 64.

6. The polypropylene composition (C) according to claim 1 obtainable by blending:

a) 50.0 to 80.0 wt.-%, based on the total weight of the composition, of a blend (A) comprising

A-1) isotactic polypropylene
A-2) polyethylene as well as ethylene containing copolymers

wherein the weight ratio of isotactic polypropylene (A-1) and polyethylene and ethylene containing copolymers (A-2) is from 3:2 to 2:3,
and
wherein blend (A) is a recycled material, which is recovered from a waste plastic material derived from post-consumer and/or post-industrial waste;
b) 20.0 to 50.0 wt.-%, based on the total weight of the composition, of a virgin polypropylene homopolymer having

(i) MFR (230 °C, 2.16 kg; ISO 1133) in the range of 12 to 27 g/10 min
(ii) a flexural modulus (ISO 178) of at least 1200 MPa

c) 0.0 to 5.0 wt.-% of a carbon black polypropylene masterbatch
d) 0.0 to 3.0 wt-% of additives selected from the group of antioxidants and/or UV stabilizers

whereby components a) to d) add up to 100 wt.-%

7. The polypropylene composition (C) according to any of the preceding claims , wherein the virgin polypropylene homopolymer has:

(vi) a tensile strength of 30 to 45 MPa (ISO 527-2); and/or
(vii) a heat deflection temperature B (0.45 MPa; ISO 75-2) of at least 76°C, preferably up to 120°C.

8. A polypropylene composition (C) according to any of the preceding claims, wherein blend (A) has a content of limonene as determined by using solid phase microextraction (HS-SPME-GC-MS) of

i) from 1 ppm to 100 ppm, preferably from 1 ppm to 50 ppm, more preferably from 2 ppm to 50 ppm, most preferably from 3 ppm to 35 ppm; or
ii) from 0.10 ppm to less than 1 ppm, preferably 0.10 ppm to less than 0.85 ppm, most preferably 0.10 ppm to less than 0.60 ppm.

9. A polypropylene composition (C) according to any of the preceding claims, wherein blend (A) contains one or more of following components:
polystyrene, polyamide, paper, wood and/or polyester in amounts of less than 1 wt.-%.

10. Use of a virgin polypropylene homopolymer together with a virgin high density polyethylene in a composition comprising a blend (A), whereby blend (A) comprises

A-1) isotactic polypropylene
A-2) polyethylene as well as ethylene containing copolymers

wherein the weight ratio of isotactic polypropylene (A-1) and polyethylene and ethylene containing copolymers (A-2) is from 19:1 to 3:2, and
wherein blend (A) is a recycled material, which is recovered from a waste plastic material derived from post-consumer and/or post-industrial waste;
whereby blend (A) is present in an amount of 20.0 to 35.0 wt.-%, based on the total weight of the composition;
whereby said virgin polypropylene homopolymer has

(i) MFR (230 °C, 2.16 kg; ISO 1133) in the range of 12 to 27 g/10 min
(ii) a flexural modulus (ISO 178) of at least 1200 MPa and is present in an amount of 50.0 to 75.0 wt.-%, based on the total weight of the composition, and

whereby said virgin high density polyethylene has

(i) MFR (230 °C, 2.16 kg; ISO 1133) in the range of 2 to 8 g/10 min

(ii) a density of 950 to 960 kg/m$^3$ (ISO 1183).

and is present in an amount of 5 to 15 wt.-% based on the total weight of the composition,
for increasing gloss (gloss measured according to DIN 67530 at an angle of 60°) by at least 2 % of the measurement value versus the gloss of the composition not containing the virgin polypropylene homopolymer and not containing the virgin high density polyethylene,
whereby a carbon black polypropylene masterbatch may optionally be present in an amount of 0 to 5.0 wt.-% with respect to the total weight of the composition

**11.** Use according to claim 10, wherein
blend (A) has a content of limonene as determined by using solid phase microextraction (HS-SPME-GC-MS) of

i) from 1 ppm to 100 ppm, preferably from 1 ppm to 50 ppm, more preferably from 2 ppm to 50 ppm, most preferably from 3 ppm to 35 ppm; or
ii) from 0.10 ppm to less than 1 ppm, preferably 0.10 ppm to less than 0.85 ppm, most preferably 0.10 ppm to less than 0.60 ppm.

**Patentansprüche**

**1.** Eine Polypropylenzusammensetzung (C), erhältlich durch Mischen von:

a) 20,0 bis 80,0 Gew.-%, bezogen auf das Gesamtgewicht der Zusammensetzung, einer Mischung (A), umfassend

A-1) isotaktisches Polypropylen
A-2) Polyethylen sowie ethylenhaltige Copolymere,wobei

das Gewichtsverhältnis von isotaktischem Polypropylen (A-1) und Polyethylen und ethylenhaltigen Copolymeren (A-2) 19:1 bis 3:7 beträgt,und
wobei die Mischung (A) ein recyceltes Material ist, das aus einem Kunststoffabfallmaterial gewonnen wird, das aus Post-Verbraucher- und/oder Post-Industrie-Abfall stammt;
b) 20,0 bis 80,0 Gew.-%, bezogen auf das Gesamtgewicht der Zusammensetzung, eines jungfräulichen Polypropylen-Homopolymers mit

(i) MFR (230 °C, 2,16 kg; ISO 1133) im Bereich von 12 bis 27 g/10 min;
(ii) einen Biegemodul (ISO 178) von mindestens 1200 MPa

c) 0,0 bis 15,0 Gew.-% eines jungfräulichen Polyethylens hoher Dichte mit

(i) MFR (230 °C, 2,16 kg; ISO 1133) im Bereich von 2 bis 8 g/10 min
(ii) eine Dichte von 950 bis 960 kg/m$^3$ (ISO 1183),

d) 0,0 bis 5,0 Gew.-% eines Polypropylen-Ruß-Masterbatches
e) 0,0 bis 3,0 Gew.-% an Additiven, ausgewählt aus der Gruppe der Antioxidantien und UV-Stabilisatoren,

wobei sich die Komponenten a) bis e) auf 100 Gew.-% aufaddieren.

**2.** Polypropylenzusammensetzung (C) nach Anspruch 1, erhältlich durch Mischen von:

a) 20,0 bis 50,0 Gew.-%, bezogen auf das Gesamtgewicht der Zusammensetzung, einer Mischung (A), umfassend

A-1) isotaktisches Polypropylen
A-2) Polyethylen sowie ethylenhaltige Copolymere,wobei

das Gewichtsverhältnis von isotaktischem Polypropylen (A-1) und Polyethylen und ethylenhaltigen Copolymeren (A-2) 19:1 bis 3:2 beträgt, und

wobei die Mischung (A) ein recyceltes Material ist, das aus einem Kunststoffabfallmaterial gewonnen wird, das aus Post-Verbraucher- und/oder Post-Industrie-Abfall stammt;
a) 50,0 bis 80,0 Gew.-%, bezogen auf das Gesamtgewicht der Zusammensetzung, eines jungfräulichen Polypropylen-Homopolymers mit

(i) MFR (230 °C, 2,16 kg; ISO 1133) im Bereich von 12 bis 27 g/10 min;
(ii) einen Biegemodul (ISO 178) von mindestens 1200 MPa

b) 0,0 bis 15,0 Gew.-% eines jungfräulichen Polyethylens hoher Dichte mit

(i) MFR (230 °C, 2,16 kg; ISO 1133) im Bereich von 2 bis 8 g/10 min
(ii) eine Dichte von 950 bis 960 kg/m$^3$ (ISO 1183),

c) 0,0 bis 5,0 Gew.-% eines Polypropylen-Ruß-Masterbatches
d) 0,0 bis 3,0 Gew.-% an Additiven, ausgewählt aus der Gruppe der Antioxidantien und UV-Stabilisatoren,

wobei sich die Komponenten a) bis d) auf 100 Gew.-% aufaddieren.

3. Polypropylenzusammensetzung (C) nach Anspruch 2, wobei das jungfräuliche Polyethylen hoher Dichte:
(iii) ein Zugmodul (1 mm/min; ISO 527-2) von mindestens 800 MPa, optional bis zu 1300 MPa, aufweist.

4. Polypropylenzusammensetzung (C) nach Anspruch 2 oder 3, wobei das jungfräuliche Polyethylen hoher Dichte
(iv) eine Wärmeformbeständigkeitstemperatur (0,45 MPa; ISO 75-2) von mindestens 62°C und optional bis zu 100°C aufweist.

5. Polypropylenzusammensetzung (C) nach einem der Ansprüche 2 bis 4, wobei das jungfräuliche Polyethylen hoher Dichte
(v) eine Shore-D-Härte von 56 bis 64 (ISO 868), vorzugsweise 58 bis 64, aufweist.

6. Polypropylenzusammensetzung (C) nach Anspruch 1, erhältlich durch Mischen von:

a) 50,0 bis 80,0 Gew.-%, bezogen auf das Gesamtgewicht der Zusammensetzung, einer Mischung (A), umfassend

A-1) isotaktisches Polypropylen
A-2) Polyethylen sowie ethylenhaltige Copolymere,wobei

das Gewichtsverhältnis von isotaktischem Polypropylen (A-1) und Polyethylen und ethylenhaltigen Copolymeren (A-2) 3:2 bis 2:3 beträgt,und
wobei die Mischung (A) ein recyceltes Material ist, das aus einem Kunststoffabfallmaterial gewonnen wird, das aus Post-Verbraucher- und/oder Post-Industrie-Abfall stammt;
b) 20,0 bis 50,0 Gew.-%, bezogen auf das Gesamtgewicht der Zusammensetzung, eines jungfräulichen Polypropylen-Homopolymers mit

(i) MFR (230 °C, 2,16 kg; ISO 1133) im Bereich von 12 bis 27 g/10 min
(ii) einen Biegemodul (ISO 178) von mindestens 1200 MPa

c) 0,0 bis 5,0 Gew.-% eines Polypropylen-Ruß-Masterbatches
d) 0,0 bis 3,0 Gew.-% an Additiven, ausgewählt aus der Gruppe der Antioxidantien und/oder UV-Stabilisatoren,

wobei sich die Komponenten a) bis d) auf 100 Gew.-% aufaddieren.

7. Polypropylenzusammensetzung (C) nach einem der vorhergehenden Ansprüche, wobei das jungfräuliche Polypropylen-Homopolymer aufweist:

(vi) eine Zugfestigkeit von 30 bis 45 MPa (ISO 527-2); und/oder
(vii) eine Wärmeformbeständigkeitstemperatur B (0,45 MPa; ISO 75-2) von mindestens 76 °C, vorzugsweise bis zu 120 °C.

8.  Polypropylenzusammensetzung (C) nach einem der vorhergehenden Ansprüche, wobei die Mischung (A) einen Gehalt an Limonen, bestimmt durch Festphasenmikroextraktion (HS-SPME-GC-MS), von

    i) von 1 ppm bis 100 ppm, vorzugsweise von 1 ppm bis 50 ppm, noch bevorzugter von 2 ppm bis 50 ppm, am meisten bevorzugt von 3 ppm bis 35 ppm; oder
    ii) von 0,10 ppm bis weniger als 1 ppm, vorzugsweise 0,10 ppm bis weniger als 0,85 ppm, am meisten bevorzugt 0,10 ppm bis weniger als 0,60 ppm

    aufweist.

9.  Polypropylenzusammensetzung (C) nach einem der vorhergehenden Ansprüche, wobei die Mischung (A) eine oder mehrere der folgenden Komponenten enthält: Polystyrol, Polyamid, Papier, Holz und/oder Polyester in Mengen von weniger als 1 Gew.-%.

10. Verwendung eines jungfräulichen Polypropylen-Homopolymers zusammen mit einem jungfräulichem Polyethylen hoher Dichte in einer Zusammensetzung, die eine Mischung (A) umfasst, wobei die Mischung (A) umfasst

    A-1) isotaktisches Polypropylen
    A-2) Polyethylen sowie ethylenhaltige Copolymere, wobei

    das Gewichtsverhältnis von isotaktischem Polypropylen (A-1) und Polyethylen und ethylenhaltigen Copolymeren (A-2) 19:1 bis 3:2 beträgt, und
    wobei die Mischung (A) ein recyceltes Material ist, das aus einem Kunststoffabfallmaterial gewonnen wird, das von Post-Verbraucher- und/oder Post-Industrie-Abfall stammt;
    wobei Mischung (A) in einer Menge von 20,0 bis 35,0 Gew.%, bezogen auf das Gesamtgewicht der Zusammensetzung, vorhanden ist;

    wobei das jungfräuliche Polypropylen-Homopolymer aufweist:

    (i) MFR (230 °C, 2,16 kg; ISO 1133) im Bereich von 12 bis 27 g/10 min
    (ii) ein Biegemodul (ISO 178) von mindestens 1200 MPa; und

    in einer Menge von 50,0 bis 75,0 Gew.-%, bezogen auf das Gesamtgewicht der Zusammensetzung, vorhanden ist, und
    wobei das jungfräuliche Polyethylen hoher Dichte aufweist:

    (i) MFR (230 °C, 2,16 kg; ISO 1133) im Bereich von 2 bis 8 g/10 min;
    (ii) eine Dichte von 950 bis 960 kg/m$^3$ (ISO 1183),

    und in einer Menge von 5 bis 15 Gew.-%, bezogen auf das Gesamtgewicht der Zusammensetzung, vorhanden ist,

    zur Erhöhung des Glanzes (Glanz gemessen nach DIN 67530 bei einem Winkel von 60°) um mindestens 2 % des Messwertes im Vergleich
    zum Glanz der Zusammensetzung, die das jungfräuliche Polypropylen-Homopolymer nicht enthält und die das jungfräuliche Polyethylen hoher Dichte nicht enthält,
    wobei ein Ruß-Polypropylen-Masterbatch gegebenenfalls in einer Menge von 0 bis 5,0 Gew.-%, bezogen auf das Gesamtgewicht der Zusammensetzung, vorhanden sein kann.

11. Verwendung nach Anspruch 10, **dadurch gekennzeichnet, dass** die Mischung (A) einen mittels Festphasenmikroextraktion (HS-SPME-GC-MS) bestimmten Gehalt an Limonen von

    i) von 1 ppm bis 100 ppm, vorzugsweise von 1 ppm bis 50 ppm, noch bevorzugter von 2 ppm bis 50 ppm, am meisten bevorzugt von 3 ppm bis 35 ppm; oder
    ii) von 0,10 ppm bis weniger als 1 ppm, vorzugsweise 0,10 ppm bis weniger als 0,85 ppm, am meisten bevorzugt 0,10 ppm bis weniger als 0,60 ppm

    aufweist.

**EP 3 916 047 B1**

**Revendications**

1. Composition de polypropylène (C) pouvant être obtenue par mélange :

    a) de 20,0 à 80,0 % en poids, basés sur le poids total de la composition, d'un mélange (A) comprenant

        A-1) un polypropylène isotactique
        A-2) un polyéthylène ainsi que des copolymères contenant de l'éthylène

    dans laquelle le rapport en poids du polypropylène isotactique (A-1) au polyéthylène et aux copolymères contenant de l'éthylène (A-2) est de 19/1 à 3/7, et
    dans laquelle le mélange (A) est un matériau recyclé, qui est récupéré à partir de matière plastique usagée dérivée de déchets post-consommation et/ou postindustriels ;
    b) de 20,0 à 80,0 % en poids, basés sur le poids total de la composition, d'un homopolymère de polypropylène vierge ayant

        (i) un MFR (230°C, 2,16 kg ; ISO 1133) dans la plage de 12 à 27 g/10 min
        (ii) un module de flexion (ISO 178) d'au moins 1200 MPa

    c) de 0,0 à 15,0 % en poids d'un polyéthylène haute densité vierge ayant

        (i) un MFR (230°C, 2,16 kg ; ISO 1133) dans la plage de 2 à 8 g/10 min
        (ii) une masse volumique de 950 à 960 kg/m$^3$ (ISO 1183),

    d) de 0,0 à 5,0 % en poids d'un mélange maître de polypropylène et de noir de carbone
    e) de 0,0 à 3,0 % en poids d'additifs choisis dans le groupe des antioxydants et des stabilisants UV
    moyennant quoi les composants a) à e) s'additionnent à 100 % en poids.

2. Composition de polypropylène (C) selon la revendication 1, pouvant être obtenue par mélange :

    a) de 20,0 à 50,0 % en poids, basés sur le poids total de la composition, d'un mélange (A) comprenant

        A-1) un polypropylène isotactique
        A-2) un polyéthylène ainsi que des copolymères contenant de l'éthylène

    dans laquelle le rapport en poids du polypropylène isotactique (A-1) au polyéthylène et aux copolymères contenant de l'éthylène (A-2) est de 19/1 à 3/2, et
    dans laquelle le mélange (A) est un matériau recyclé, qui est récupéré à partir de matière plastique usagée dérivée de déchets post-consommation et/ou postindustriels ;
    b) de 50,0 à 80,0 % en poids, basés sur le poids total de la composition, d'un homopolymère de polypropylène vierge ayant

        (i) un MFR (230°C, 2,16 kg ; ISO 1133) dans la plage de 12 à 27 g/10 min
        (ii) un module de flexion (ISO 178) d'au moins 1200 MPa

    c) de 0,0 à 15,0 % en poids d'un polyéthylène haute densité vierge ayant

        (i) un MFR (230°C, 2,16 kg ; ISO 1133) dans la plage de 2 à 8 g/10 min
        (ii) une masse volumique de 950 à 960 kg/m$^3$ (ISO 1183),

    d) de 0,0 à 5,0 % en poids d'un mélange maître de polypropylène et de noir de carbone
    e) de 0,0 à 3,0 % en poids d'additifs choisis dans le groupe des antioxydants et des stabilisants UV
    moyennant quoi les composants a) à d) s'additionnent à 100 % en poids.

3. Composition de polypropylène (C) selon la revendication 2, dans laquelle le polyéthylène haute densité vierge a :
    (iii) un module de traction (1 mm/min ; ISO 527-2) d'au moins 800 MPa, optionnellement jusqu'à 1300 MPa.

4. Composition de polypropylène (C) selon la revendication 2 ou 3, dans laquelle le polyéthylène haute densité vierge a

(iv) une température de déformation thermique (0,45 MPa ; ISO 75-2) d'au moins 62°C et optionnellement jusqu'à 100°C.

**5.** Composition de polypropylène (C) selon l'une quelconque des revendications 2 à 4, dans laquelle le polyéthylène haute densité vierge a
(v) une dureté shore D de 56 à 64 (ISO 868), de préférence de 58 à 64.

**6.** Composition de polypropylène (C) selon la revendication 1, pouvant être obtenue par mélange :

a) de 50,0 à 80,0 % en poids, basés sur le poids total de la composition, d'un mélange (A) comprenant

A-1) un polypropylène isotactique
A-2) un polyéthylène ainsi que des copolymères contenant de l'éthylène

dans laquelle le rapport en poids du polypropylène isotactique (A-1) au polyéthylène et aux copolymères contenant de l'éthylène (A-2) est de 3/2 à 2/3, et
dans laquelle le mélange (A) est un matériau recyclé, qui est récupéré à partir de matière plastique usagée dérivée de déchets post-consommation et/ou postindustriels ;
b) de 20,0 à 50,0 % en poids, basés sur le poids total de la composition, d'un homopolymère de polypropylène vierge ayant

(i) un MFR (230°C, 2,16 kg ; ISO 1133) dans la plage de 12 à 27 g/10 min
(ii) un module de flexion (ISO 178) d'au moins 1200 MPa

c) de 0,0 à 5,0 % en poids d'un mélange maître de polypropylène et de noir de carbone
d) de 0,0 à 3,0 % en poids d'additifs choisis dans le groupe des antioxydants et/ou des stabilisants UV
moyennant quoi les composants a) à d) s'additionnent à 100 % en poids.

**7.** Composition de polypropylène (C) selon l'une quelconque des revendications précédentes, dans laquelle l'homopolymère de polypropylène vierge a :

(vi) une résistance à la traction de 30 à 45 MPa (ISO 527-2) ; et/ou
(vii) une température de déformation thermique B (0,45 MPa ; ISO 75-2) d'au moins 76°C, de préférence jusqu'à 120°C.

**8.** Composition de polypropylène (C) selon l'une quelconque des revendications précédentes, dans laquelle le mélange (A) a une teneur en limonène, telle que déterminée par utilisation d'une micro-extraction en phase solide (HS-SPME-GC-MS)

i) de 1 ppm à 100 ppm, de préférence de 1 ppm à 50 ppm, plus préférablement de 2 ppm à 50 ppm, le plus préférablement de 3 ppm à 35 ppm ; ou
(ii) de 0,10 ppm à moins de 1 ppm, de préférence de 0,10 ppm à moins de 0,85 ppm, le plus préférablement de 0,10 ppm à moins de 0,60 ppm.

**9.** Composition de polypropylène (C) selon l'une quelconque des revendications précédentes, dans laquelle le mélange (A) contient un ou plusieurs des composants suivants
polystyrène, polyamide, papier, bois et/ou polyester en des quantités inférieures à 1 % en poids.

**10.** Utilisation d'un homopolymère de polypropylène vierge conjointement avec un polyéthylène haute densité vierge dans une composition comprenant un mélange (A), moyennant quoi le mélange (A) comprend

A-1) un polypropylène isotactique
A-2) un polyéthylène ainsi que des copolymères contenant de l'éthylène

dans laquelle le rapport en poids du polypropylène isotactique (A-1) au polyéthylène et aux copolymères contenant de l'éthylène (A-2) est de 19/1 à 3/2, et
dans laquelle le mélange (A) est un matériau recyclé, qui est récupéré à partir de matière plastique usagée dérivée de déchets post-consommation et/ou postindustriels ;

moyennant quoi le mélange (A) est présent en une quantité de 20,0 à 35,0 % en poids basés sur le poids total de la composition ;
moyennant quoi ledit homopolymère de polypropylène vierge a

(i) un MFR (230°C, 2,16 kg ; ISO 1133) dans la plage de 12 à 27 g/10 min
(ii) un module de flexion (ISO 178) d'au moins 1200 MPa

et est présent en une quantité de 50,0 à 75,0 % en poids basés sur le poids total de la composition, et moyennant quoi ledit polyéthylène haute densité vierge a

(i) un MFR (230°C, 2,16 kg ; ISO 1133) dans la plage de 2 à 8 g/10 min
(ii) une masse volumique de 950 à 960 kg/m$^3$ (ISO 1183),

et est présent en une quantité de 5 à 15 % en poids basés sur le poids total de la composition, pour augmenter le brillant (brillant mesuré conformément à la norme DIN 67530 avec un angle de 60°) d'au moins 2 % de la valeur de mesure par rapport au brillant de la composition ne contenant pas l'homopolymère de polypropylène vierge et ne contenant pas le polyéthylène haute densité vierge,
moyennant quoi un mélange maître de polypropylène et de noir de carbone peut optionnellement être présent en une quantité de 0 à 5,0 % en poids par rapport au poids total de la composition.

11. Utilisation selon la revendication 10, dans laquelle le mélange (A) a une teneur en limonène, telle que déterminée par utilisation d'une micro-extraction en phase solide (HS-SPME-GC-MS)

i) de 1 ppm à 100 ppm, de préférence de 1 ppm à 50 ppm, plus préférablement de 2 ppm à 50 ppm, le plus préférablement de 3 ppm à 35 ppm ; ou
(ii) de 0,10 ppm à moins de 1 ppm, de préférence de 0,10 ppm à moins de 0,85 ppm, le plus préférablement de 0,10 ppm à moins de 0,60 ppm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019086359 A
- US 5767230 A

- WO 2015197434 A1


### Non-patent literature cited in the description

- Effect of Ethylene-Propylene Copolymer Composition on Morphology and Surface Properties of Impact Poly (propylene) Copolymer. **KIM, SOON-DEOK et al.** Macromolecular Symposia. WILEY-VCH Verlag, 2012, 27-33